# EUROPÄISCHE PATENTANMELDUNG

(11) **EP 1 916 425 A1**
(43) Veröffentlichungstag der Anmeldung: **30.04.2008**
(21) Anmeldenummer: 07118941.9
(22) Anmeldetag: 22.10.2007
(51) Int. Cl.: F15B 13/04, F15B 13/042, F16K 11/07, F16K 31/122

(54) **Pneumatisches 5/3-Wegeventil in Schieberbauweise**

(30) Priorität: 24.10.2006 DE 102006050651
(71) Anmelder: Bosch Rexroth AG, 71701 Schwieberdingen (DE)
(72) Erfinder: Delhaie, Laurent, 74600 Seynord (FR)
(74) Vertreter: Kietzmann, Lutz

(57) **Zusammenfassung**

Pneumatisches 5/3-Wegeventil in Schieberbauweise mit einem in einem Ventilgehäuse (1) mit äußeren Anschlüssen (P, A, B, R, S) längsbewegbar angeordneten beidseitig steuerdruckbeaufschlagbaren Ventilschieber (2) zum Schalten des Druckluftflusses zwischen den Anschlüssen (P, A, B, R, S), wobei eine mittlere Ruhestellung durch mindestens ein stirnseitig des Ventilschiebers (2) angeordnetes Federelement (4a, 4b) realisiert ist, wobei beidseitig des Ventilschiebers (2) ein Federelement (4a; 4b) jeweils zwischen einem in Richtung des Endes des Ventilschiebers (2) verschiebbaren ersten Federteller (6) und einem ortsfest am Ende des Ventilschiebers (2) montierten zweiten Federteller (7) angeordnet ist.

## Beschreibung

Die vorliegende Erfindung betrifft ein pneumatisches 5/3-Wegeventil in Schieberbauweise mit einem in einem Ventilgehäuse mit äußeren Anschlüssen längsbewegbar angeordneten beidseitig steuerdruckbeaufschlagten Ventilschieber zum Schalten des Druckluftflusses zwischen den Anschlüssen, wobei eine mittlere Ruhestellung durch mindestens ein stirnseitig des Ventilschiebers angeordnetes Federelement realisierbar ist.

Das Einsatzgebiet erfindungsgegenständlicher Schieberventile erstreckt sich vornehmlich auf den Anlagenbau. Im Rahmen pneumatisch betriebener Anlagen, wie Handhabungseinrichtungen oder Fertigungseinrichtungen, kommen derartige Ventile zur Ansteuerung von Aktoren - wie Pneumatikzylindern - zum Einsatz. In der einen Schaltstellung kann damit die Druckmittelbeauschlagung eines Pneumatikzylinders zu einer Seite des Kolbens und in der anderen Schaltstellung kann eine Beaufschlagung des Pneumatikzylinders zur gegenüberliegenden Seite des Kolbens bewirkt werden. Die Mittelstellung des 5/3-Wegeventils stellt dagegen eine Ruhestellung dar, in welcher ein Druckmittelfluss durch das Mehrwegeventil unterbrochen ist. Die Schieberbauweise des Mehrwegeventils gestattet eine recht einfache konstruktive Umsetzung.

Aus der DE 41 37 868 A1 geht ein gattungsgemäßes 5/3-Wegeventil hervor. Das Ventilgehäuse weist eine langgestreckte Form auf, welche die Schieberbohrung zur Aufnahme des Ventilschiebers beherbergt. Zu beiden Enden des Ventilgehäuses sind Vorsteuerventile angeordnet, welche die endseitig des Ventilschiebers angeordneten Steuerdruckkammern beaufschlagen, um eine Hin- und Herbewegung des Ventilschiebers zu ermöglichen. Diese Hin- und Herbewegung des Ventilschiebers erfolgt jeweils gegen die Kraft einer integrierten Druckfeder. Die Druckfeder sorgt dafür, dass der Ventilschieber im nicht-steuerdruckbeaufschlagten Zustand eine mittlere Ruhestellung einnimmt, in welcher sämtliche äußeren Anschlüsse des 5/3-Wegeventils abgeschlossen sind. Die Druckfeder ist im Bereich des einen Gehäuseendes angeordnet. Auf einem Absatz des Ventilschiebers befindet sich ein erster Federteller, welcher in einer Achsrichtung relativ zum Ventilschieber verschiebbar ist und in der Gegenachsrichtung gegen einen Bund des Ventilschiebers zur Anlage kommt. Auf demselben Absatz ist ein zweiter, ebenfalls axial bewegbarer Federteller vorgesehen, wobei die Druckfeder zwischen radial äußeren Tellerbereichen des ersten und zweiten Federtellers angeordnet ist. Diese konstruktive Lösung zur Realisierung der mittleren Ruhestellung erfordert jedoch einen kleineren wirksamen Steuerkolbendurchmesser, an dem Ende des Ventilschiebers, an welchem die Druckfeder angeordnet ist. Der Bauraum wird hier für die Unterbringung der Druckfeder beansprucht. Am gegenüberliegenden Ende des Ventilschiebers ist jedoch ein relativ großflächiger Steuerkolben am Ventilschieber ausgeformt. Somit hat dasjenige Vorsteuerventil, welches dem druckfederseitigem Ende des Ventilschiebers zugeordnet ist, einen höheren Steuerdruck aufzubringen, um den Ventilschieber in Bewegung zu setzen, als das andere Vorsteuerventil. Dies beeinträchtigt die Qualität der Hin- und Herbewegung des Ventilschiebers.

Im allgemeinen Stand der Technik ist es zur Vermeidung derartiger Betätigungskraftunterschiede bekannt, beidseits des Ventilschiebers eine Druckfeder anzuordnen, welche den Ventilschieber beidseits axialkraftbeaufschlagen, so dass sich eine mittlere Ruhestellung in Folge des Kräftegleichgewichts einstellt. Konstruktive Lösungen, welche dieses Konzept umsetzen, erfordern jedoch ein recht langbauendes Ventilgehäuses, welches zur Unterbringung zweier Druckfedern beidseits des Ventilschiebers erforderlich ist. Hierdurch erhöht sich in nachteiliger Weise auch das Bauvolumen eines solchen 5/3-Wegeventils. Insbesondere im Hinblick auf eine Modulbauweise, in deren Rahmen neben einer 5/3-Ventilfunktion auch eine 5/2-Ventilfunktion oder 2/x3/2-Ventilfunktion angeboten werden, soll jedoch verhindert werden, dass die verschieden umgesetzten Ventilfunktionen jeweils unterschiedlich große Ventilgehäuse verursachen, was auf Kosten der Modularität geht.

Es ist daher die Aufgabe der vorliegenden Erfindung, ein pneumatisches 5/3-Wegeventil zu schaffen, welches einer Modulbauweise gerecht wird und eine beidseits gleichmäßige Schieberbetätigungskraft sicherstellt.

Die Aufgabe wird ausgehend von einem pneumatischen 5/3-Wegeventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass beidseitig des Ventilschiebers ein Federelement jeweils zwischen einem in Richtung des Endes des Ventilschiebers verschiebbaren ersten Federteller und einem ortsfest am Ende des Ventilschiebers montierten zweiten Federteller angeordnet ist.

Der Vorteil dieser Bauweise liegt insbesondere darin, dass hiermit ein kurzbauendes Ventilgehäuse realisierbar ist. Denn die spezielle Anordnung der Federelemente in Verbindung mit dem Ventilschieber lässt eine bauraumsparende Unterbringung zu. Da sich somit das Bauvolumen des erfindungsgemäßen 5/3-Wegeventils gegenüber anderen Ventilfunktionen nicht vergrößert, eignet sich das erfindungsgemäße Wegeventil insbesondere für ein modular aufgebautes Baukastensystem. Da die erfindungsgemäße Lösung eine einfache Toleranzkette bewirkt, erhöht sich die Genauigkeit für die Zentralposition des Ventilschiebers. Bei wechselseitiger Steuerdruckbeaufschlagung des Ventilschiebers arbeitet jede Druckfeder im Wechsel.

Vorzugsweise lässt sich der zweite Federteller formschlüssig am Ende des Ventilschiebers anbringen, beispielsweise kann an dieser Stelle eine Bayonettverbindung erfolgen. Somit lässt sich der zweite Federteller nach Aufstecken der Druckfeder durch eine einfache Einrastbewegung am Ventilschieber befestigen. Hieraus resultiert eine denkbar einfache Montage.

Beide Federteller weisen vorzugsweise je einen außenradialen Anschlagabschnitt auf, an dem das Federelement stirnseitig zur Anlage kommt. Der Anschlagabschnitt geht in einen Führungsabschnitt zur Führung des Federelements über. Somit kann mit einem einzigen Bauteil die Anschlagfunktion und Führungsfunktion für das Federelement umgesetzt werden.

Während der zweite Federteller zur Realisierung des Bayonettverschlusses vorzugsweise ein aus Kunststoff bestehendes Spritzgussteil sein sollte, lässt sich der erste Federteller vorteilhafterweise aus einem Metallblech nach Art eines Stanzbiegeteils herstellen. Der als Stanzbiegeteil ausgeführte erste Federteller beansprucht günstigerweise besonders wenig Bauraum innerhalb des Ventilgehäuses.

Gemäß einer weiteren, die Erfindung verbessernden Maßnahme wird vorgeschlagen, dass der zweite Federteller nicht im Sinne einer Doppelfunktion gleichzeitig als Steuerdruckkolben ausgebildet ist. Eine einfache Montage lässt sich dadurch erzielen, dass der erforderliche Steuerkolben durch ein separates Bauteil ausgebildet wird, welches in die zugeordnete Steuerdruckkammer eingelegt wird und am zweiten Federteller zur Anlage kommt.

Die erfindungsgemäße Lösung für die Umsetzung eines 5/3-Wegeventils liefert darüber hinaus die konstruktive Voraussetzung dafür, ein und dasselbe Ventilgehäuse auch zur alternativen Aufnahme von zwei Teilschiebern auszubilden, um eine 2x3/2-Wegeventil zu bilden oder alternativ hierzu auch ein 5/2-Wegeventil. Letzterenfalls ist lediglich ein diese Ventilfunktion umsetzender Ventilschieber gegen den die 5/3-Ventilfunktion umsetzenden Ventilschieber auszutauschen.

Weitere, die Erfindung verbessernde Maßnahmen werden nachstehend gemeinsam mit der Beschreibung eines bevorzugten Ausführungsbeispiels anhand der Figuren näher dargestellt. Es zeigt:
- Fig.1: einen Längsschnitt eines pneumatischen 5/3-Wegeventils in mittlerer Ruhestellung des Ventilschiebers,
- Fig.2: eine Explosionsdarstellung des im Wegeventil nach Fig.1 eingesetzten Ventilschiebers mit Federmitteln und
- Fig.3: einen Längsschnitt durch das 5/3-Wegeventil in einer Schaltstellung.

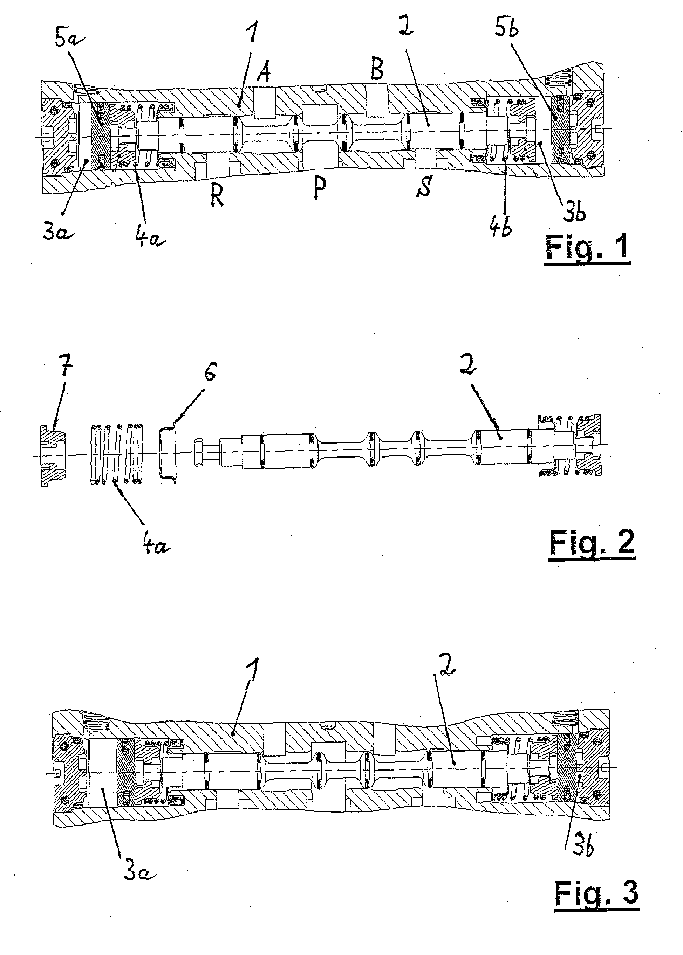

Gemäß Fig.1 weist das Ventilgehäuse 1 des pneumatischen 5/3-Wegeventils äußere Anschlüsse P, A, B, R, S auf. Innerhalb des Ventilgehäuses 1 ist entlang dessen Längserstreckung ein Ventilschiebers 2 zum Schalten des Druckmittelflusses zwischen den äußeren Anschlüssen P, A, B, R, S vorgesehen. Der Ventilschieber 2 ist durch je endseitig angeordnete Steuerdruckkammern 3a und 3b steuerdruckbeaufschlagbar, wodurch eine wechselseitige Hin- und Herbewegung bewirkt wird. In der hier dargestellten mittleren Ruhestellung sind sämtliche äußeren Anschlüsse P, A, B, R, S abgeschlossen, es findet also kein Druckluftfluss durch das Ventilgehäuse 1 statt. In der mittleren Ruhestellung wird der Ventilschieber 2 durch beidseitig angeordnete Federelemente 4a und 4b gehalten, welche sich einseitig am Ventilgehäuses 1 und zur anderen Seite hin indirekt am Ventilschieber 2 abstützen. Durch das sich zwischen den beiden als Druckfedern ausgebildete Federelementen 4a und 4b einstellende Kräftegleichgewicht wird die mittlere Ruhestellung des Ventilschiebers 2 erzeugt. In die anderen beiden Schaltpositionen ist der Ventilschieber 2 dagegen durch Beaufschlagung der Steuerkammer 3a oder der Steuerkammer 3b bringbar, wobei die Steuerkammern 3a und 3b durch jeweils zugeordnete Steuerdruckkolben 5a sowie 5b begrenzt sind. Die Steuerdruckkolben 5a und 5b weisen integrierte dynamische Dichtungen zur Abdichtung der Steuerkammern 3a bzw. 3b auf und kommen jeweils endseitig am Ventilschieber 2 zur Anlage.

Gemäß Fig. 2 ist - hier exemplarisch - das linksseitige Federelement 4a zwischen einem in Richtung des Endes des Ventilschiebers 2 verschiebbaren ersten Federteller 6 und einem ortsfest am Ende des Ventilschiebers montierten zweiten Federteller 7 angeordnet.

Beide Federteller 6 und 7 weisen je einen außenradialen Anschlagabschnitt auf, an dem das Federelement 4a stirnseitig zur Anlage kommt. Daneben ist ein zylindrischer Führungsabschnitt zur Führung des Federelements 4a vorgesehen.

Der erste Federteller 6 ist ein Stanzbiegeteil und besteht insoweit aus einem Metallblech. Dagegen stellt der zweite Federteller 7 ein Spritzgussteil aus Kunststoff dar. Der zweite Federteller 7 lässt sich formschlüssig am Ende des Ventilschiebers 2 befestigen, in dem an dieser Stelle ein Bayonettverschluss zwischen Ventischieber 2 und dem zweiten Federteller 7 ausgebildet ist. Das rechtsseitige Ende des Ventilschiebers 2 zeigt die vorstehend in Einzelteilen beschriebene Baueinheit im montierten Zustand.

Die Fig.3 zeigt das 5/3-Wegeventil in einer Schaltposition, in welcher die linksseitige Steuerdruckkammer 3a mit einem Steuerdruck beaufschlagt ist, während die rechtsseitige Steuerdruckkammer 3b entlüftet ist. In dieser Schaltposition ist der Arbeitsanschluss A mit dem Speisedruckanschluss P verbunden zwecks Belüftung und der andere Arbeitsanschluss B ist mit dem Entlüftungsanschluss S zwecks Entlüftung verbunden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche Gebrauch machen. So lässt sich der eine 5/3-Ventilfunktion verwirklichende Ventilschieber 2 auch gegen zwei Teilschieber austauschen, welche eine 2x3/2-Ventilfunktion unter Beibehaltung des Ventilgehäuses 1 verwirklichen. Daneben ist in ähnlicher Weise auch die Umsetzung einer 5/2-Ventilfunktion denkbar.

### Bezugszeichenliste

- 1: Ventilgehäuse
- 2: Ventilschieber
- 3: Steuerkammer
- 4: Federelement
- 5: Steuerkolben

- A: erster Arbeitanschluss
- B: zweiter Arbeitsanschluss
- P: Speisedruckanschluss
- R: erster Entlüftungsanschluss
- S: zweiter Entlüftungsanschluss

## Patentansprüche

1. Pneumatisches 5/3-Wegeventil in Schieberbauweise mit einem in einem Ventilgehäuse (1) mit äußeren Anschlüssen (P, A, B, R, S) längsbewegbar angeordneten beidseitig steuerdruckbeaufschlagbaren Ventilschieber (2) zum Schalten des Druckluftflusses zwischen den Anschlüssen (P, A, B, R, S), wobei eine mittlere Ruhestellung durch mindestens ein stirnseitig des Ventilschiebers (2) angeordnetes Federelement (4a, 4b) realisiert ist,
**dadurch gekennzeichnet, dass** beidseitig des Ventilschiebers (2) ein Federelement (4a; 4b) jeweils zwischen einem in Richtung des Endes des Ventilschiebers (2) verschiebbaren ersten Federteller (6) und einem ortsfest am Ende des Ventilschiebers (2) montierten zweiten Federteller (7) angeordnet ist.

2. Pneumatisches 5/3-Wegeventil nach Anspruch 1,
**dadurch gekennzeichnet, dass** der zweite Federteller (7) formschlüssig am Ende des Ventilschiebers (2) angebracht ist.

3. Pneumatisches 5/3-Wegeventil nach Anspruch 2,
**dadurch gekennzeichnet, dass** die formschlüssige Verbindung nach Art einer Bajonettverbindung ausgestaltet ist.

4. Pneumatisches 5/3-Wegeventil nach Anspruch 1,
**dadurch gekennzeichnet, dass** beide Federteller (6, 7) je einen außenradialen Anschlagabschnitt aufweisen, an dem das Federelement (4a; 4b) stirnseitig zur Anlage kommt, der in einen Führungsabschnitt zur Führung des Federelements (4a; 4b) übergeht.

5. Pneumatisches 5/3-Wegeventil nach Anspruch 1,
**dadurch gekennzeichnet, dass** der erste Federteller (6) ein aus einem Metallblech bestehendes Stanzbiegeteil ist.

6. Pneumatisches 5/3-Wegeventil nach Anspruch 1,
**dadurch gekennzeichnet, dass** der zweite Federteller (7) ein aus Kunststoff bestehendes Spritzgussteil ist.

7. Pneumatisches 5/3-Wegeventil nach Anspruch 1,
**dadurch gekennzeichnet, dass** der zweite Federteller (7) an einem separaten, eine zugeordnete Steuerdruckkammer (3a; 3b) dynamisch begrenzenden Steuerkolben (5a; 5b) zur Anlage kommt.

8. Pneumatisches 5/3-Wegeventil nach Anspruch 1,
**dadurch gekennzeichnet, dass** das Federelement (4a; 4b) nach Art einer Spiraldruckfeder ausgebildet ist.

9. Pneumatisches 5/3-Wegeventil nach Anspruch 1,
**dadurch gekennzeichnet, dass** das Ventilgehäuse (1) zur alternativen Aufnahme von zwei Teilschiebern für die Umsetzung einer 2x3/2-Ventilfunktion ausgebildet ist.

10. Pneumatisches 5/3-Wegeventil nach Anspruch 1,
**dadurch gekennzeichnet, dass** das Ventilgehäuse (1) zur alternativen Aufnahme eines Ventilschiebers für die Umsetzung einer 5/2-Ventilfunktion ausgebildet ist.
